# EUROPÄISCHE PATENTSCHRIFT

(11) **EP 3 202 518 B1**
(45) Veröffentlichungstag und Bekanntmachung des Hinweises auf die Patenterteilung: **21.11.2018**
(21) Anmeldenummer: 16153760.0
(22) Anmeldetag: 02.02.2016
(51) Int. Cl.: B23H 7/10, B65H 57/00

(54) **VORRICHTUNG FÜR DAS EINFÄDELN DER DRAHTELEKTRODE EINER DRAHTERODIERMASCHINE**
DEVICE FOR THREADING THE WIRE ELECTRODE OF A WIRE EROSION MACHINE
DISPOSITIF POUR L'ENFILAGE DU FIL-ELECTRODE D'UNE MACHINE D'ELECTRO-EROSION

(43) Veröffentlichungstag der Anmeldung: 09.08.2017
(73) Patentinhaber: Agie Charmilles SA, 6616 Losone (CH)
(72) Erfinder: VOLPI, Franco, 6652 Tegna (CH); TOBLER, Karl, 6673 Maggia (CH); ROTA, Renato, 6616 Losone (CH)
(74) Vertreter: Fenner, Seraina

(56) Entgegenhaltungen:
- EP-A1- 2 564 967
- DE-A1- 3 236 263
- JP-A- H01 205 930

## Beschreibung

Vorliegende Erfindung betrifft eine Vorrichtung für das Einfädeln einer Drahtelektrode im Arbeitsraum einer Drahterodiermaschine.

Drahterodiermaschinen sind regelmässig mit einer Vorrichtung für das automatische Einfädeln der Drahtelektrode ausgestattet. Eine automatische Einfädelvorrichtung ermöglicht es, unbeaufsichtigt komplette Bearbeitungen durchzuführen. Eine derartige Vorrichtung ist somit von ganz wesentlicher Bedeutung für Drahterodiermaschinen.
Die neue Drahtelektrode wird von einer Drahtvorratsrolle abgezogen und automatisch durch den Arbeitsraum transportiert und von dort anschliessend zur Drahtentsorgung befördert. Im Arbeitsraum ist die Drahtelektrode zwischen dem oberen Drahtführungskopf und dem unteren Drahtführungskopf gespannt und wird sehr genau geführt. Beim Einführen der Drahtelektrode liegt die Schwierigkeit darin, dass im Bereich zwischen dem oberen und dem unteren Drahtführungskopf im Allgemeinen keine Einfädeldüse oder sonstige Hilfsführungsmittel liegen dürfen, weil dieser Bereich für die Relativbewegungen zwischen Werkstück und Elektrode frei sein muss. Erschwerend kommen dazu, dass u. U. über beträchtliche Höhen von 200mm und mehr eingefädelt werden muss, dass Drahtelektroden unterschiedlicher Dicke eingesetzt werden, dass die Drahtelektroden unterschiedliche Steifigkeit aufweisen können, insbesondere eine bestimmte Drahtkrümmung, oder dass die Drahtelektrode bei sehr kleinem Durchmesser ein fadenähnliches Verhalten aufweist, wobei der Draht an Führungsflächen beispielsweise haften bleibt, dass unterschiedliche Dielektrika eingesetzt werden, dass gelegentlich in den bestehenden Schnittspalt oder in eine Startbohrung eingefädelt werden muss, dass das Werkstück abgesetzte Bereiche aufweisen kann, usw.
Drahterodiermaschinen werden selten über den gesamten Anwendungsbereich eingesetzt. Jedenfalls werden die Anforderungen an die Drahterodiermaschine, wie auch an die automatische Einfädelvorrichtung allgemein stets anspruchsvoller. In bestimmten Anwendungsbereichen besteht das Bedürfnis in stets kleinere Startlöcher einfädeln zu können. Der klassische im Drahtführungskopf aufgebaute Einfädelstrahl aus Wasser oder einem anderen Fluid ist zwar für den Normalfall immer noch die bevorzugte Lösung, stösst hier jedoch an seine Grenzen. Dieser ist zunehmend ungeeignet für die immer kleiner werdenden Startbohrungen, da immer weniger Platz zwischen Draht und Startbohrung verbleibt. Zur Verbesserung dieser Situation wurden bereits einige Lösungen vorgeschlagen.

Bei einer bekannten Einfädelvorrichtung gemäss CH650962 wird der obere Drahtführungskopf an die Startbohrung auf der Werkstückoberfläche geführt, wobei der Drahtführungskopf im unteren Bereich mit einer Dichtung versehen ist, sodass Drahtführungskopf und Werkstück eine Druckkammer bilden. Beim Einfädelvorgang wird der Draht also zwingend z.B. den Weg durch die Startbohrung nehmen müssen. Dieses Verfahren ist zwar sehr wirksam aber leider nur unter idealen Bedingungen anwendbar. Zum Beispiel scheitert eine derartige Einfädelvorrichtung, wenn an der Peripherie eines Werkstücks oder in einem abgesetzten Bereich eingefädelt werden muss.

Die primären Aufgaben der Drahtführungsköpfe bestehen darin, die Drahtelektrode zu führen, die Strompulse auf den Draht zu übertragen und die Spülung des Funkenspalts sicherzustellen. Die hierfür benötigten Mittel sollten möglichst nah am Werkstück liegen, damit die besten Bearbeitungsergebnisse erreicht werden können. Alle weiteren Aufgaben, inklusive die Drahteinfädelung sind untergeordnet. Insofern sind die Verbesserungsmöglichkeiten innerhalb des Drahtführungskopfs beschränkt.

Bei einer weiteren bekannten Einfädelvorrichtung wird der Draht vor dem Einfädeln vor dem oberen Drahtführungskopf gestreckt und getrennt, sodass der Draht gerichtet ist und eine verjüngte Spitze aufweist. Der Draht wird mittels einer geschlossenen Rohrführung durch den oberen Drahtführungskopf bis an das Werkstück geführt. Der Draht kann hier also nicht entweichen und kann sicher eingefädelt werden. Nachteilig an dieser Lösung ist, dass die Drahtführung zwecks Anwendung der Rohrführung geöffnet bzw. bewegt werden muss. Dies bedingt eine spezielle Konstruktion der Drahtführung, was teuer und aufwendig ist, da sehr hohe Anforderungen an die Genauigkeit der Drahtführung gestellt werden.
Bei einer Lösung wie in der EP233297 publiziert, wird eine aus zwei Hälften bestehende externe Düse unmittelbar an den oberen Drahtführungskopf geführt, um einen dünnen Einfädelstrahl zu erzeugen. Die externe Düse befindet sich während der Bearbeitung in einer Ruhelage, oberhalb des Arbeitsbereichs, und wird lediglich während dem Einrichten der Drahtelektrode in die Einfädelbetriebsstellung gebracht. Der erzielbare Fluidstrahl ist jedoch immer noch relativ dick und zudem eher schwach, da nur sehr wenig Platz für diese geteilte Einfädeldüse zur Verfügung steht.
Bei einer Lösung gemäss WO2009157205 wird eine zweigeteilte externe Düse ebenfalls unmittelbar an den oberen Drahtführungskopf geführt, wobei die Positionierung mittels eines Pneumatik-Zylinders erfolgt und die zwei Düsenhälften mittels eine separaten Antriebs betätigt, d.h. geschlossen und geöffnet werden.
Zur Sicherstellung der genauen Lage und Position der Düsenhälften zueinander sind an den Düsenhälften geometrische Merkmale in Form von Rillen und Vorsprünge vorgesehen. Bei einer ähnlichen Lösung gemäss EP2564967 wird ebenfalls eine zweigeteilte externe Düse unmittelbar an den oberen Drahtführungskopf geführt, wobei die zwei Hälften mittels einer Feder in der offenen Position gehalten werden; durch Bewegung der externen Düse von der Ruhelage zur Arbeitsstellung und Anschlag an den Drahtführungskopf wird die externen Düse aktiv geschlossen. In den zwei letztgenannten Fällen ist die zweigeteilte Düse durch eine massive Bewegungsvorrichtung zum Bewegen der Strahldüse zwischen einer Ruhelage entfernt vom Drahtführungskopf zu einer Betriebsposition in Kontakt zum Drahtführungskopf getragen.
Bei einer Lösung gemäss DE3236263A1, aus der auch der Oberbegriff des Anspruchs 1 bekannt ist, wird eine bewegbare Führungsrohranordnung an den oberen Drahtführungskopf geführt und mit dem Draht ausgerichtet. Die Drahtelektrode wird in die Führungsrohranordnung geschoben, und die Führungsrohranordnung selbst wird in die Startbohrung geführt. Die Drahtelektrode wird weiter vorgeschoben und in den unteren 3292AL_Erstanmeldung_1.2.2016.docx
Drahtführungskopf geführt. Schliesslich wird die mit einem Längsschlitz versehene Führungsrohranordnung durch seitliches bewegen aus dem Führungsbereich entfernt.
Bei einer Lösung gemäss EP2839917 wird eine bewegbare Führungsrohranordnung an den oberen Drahtführungskopf geführt. Die Drahtelektrode tritt mit einer kleinen Neigung aus dem oberen Drahtführungskopf und wir in die Führungsrohranordnung und in die Startbohrung geführt. Die kleine Neigung garantiert, dass die Drahtelektrode der Führungsrohranordnung folgt.

Mit Ausnahme der CH650962 handelt es sich bei all den genannten Lösungen um externe Einfädelvorrichtungen. Extern bedeutet in diesem Zusammenhang, dass diese Vorrichtung im normalen Erodierbetrieb ausserhalb des Drahtführungskopfes liegt, und lediglich während des Einfädelvorgangs in den Drahtführungsbereich unterhalb des Drahtführungskopfes gebracht wird. Zu den Gründen weshalb diese Einfädelvorrichtungen extern angeordnet sind zählen folgende:
- Bei hohen Anforderungen, d.h. kleinen Startbohrungen und dünnen Drähten muss die Einfädeldüse ganz nah beim Werkstück angeordnet sein; dieser Platz wird im Erodierbetrieb jedoch auch von der Spüldüse, Drahtführung, Stromzuführung usw. beansprucht.
- Für "normale" Anforderungen beim Drahteinfädeln, d.h. Startbohrungen >1mm genügt eine klassische im Drahtführungskopf integrierte Einfädeldüse; eine spezielle Einfädeldüse für erhöhte Anforderungen ist also bevorzugt als Option zu sehen.

Die Qualität der Einfädelvorrichtung lässt sich insbesondere bewerten anhand der Zuverlässigkeit beim Einfädeln der Drahtelektrode, der Dauer des Einfädelvorganges, des kleinster Bohrungsdurchmessers in welchem sicher eingefädelt werden kann und dem kleinsten Drahtdurchmesser der zuverlässig eingefädelt werden kann.

Die vorgenannten Einrichtungen sind teilweise sehr aufwendig und somit teuer. Beim minimalen Bohrungsdurchmesser und dem kleinsten Drahtdurchmesser sind die Grenzen durch den jeweiligen Aufbau gegeben.

### Gegenstand der Erfindung

Vorliegende Erfindung will den oben erwähnten Problemen Abhilfe schaffen, mit einer zuverlässigen, einfachen und günstigen Einfädelvorrichtung für feine Drahtelektroden.

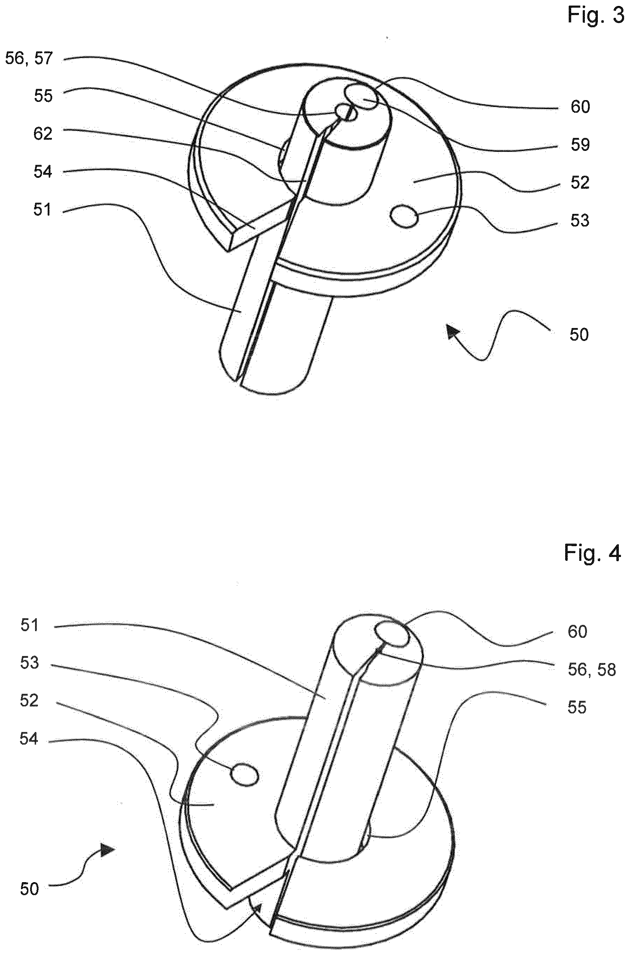

Diese Aufgabe wird durch die Einfädelvorrichtung gemäss Anspruch 1 gelöst. Die erfindungsgemässe Idee besteht darin, während des Einfädelvorgangs der Drahtelektrode vom oberen Drahtführungskopf, durch den Arbeitsraum und zum unteren Drahtführungskopf der Drahterodiermaschine, eine externe Einfädelvorrichtung an den oberen Drahtführungskopf zu führen. Hierzu umfasst die erfindungsgemässe Einfädelvorrichtung 30 eine Einfädeldüse 50 bestehend aus einem Einfädeldüsenkörper 51 mit einer Führungsbohrung 56 zur Führung der einzufädelnden Drahtelektrode 2, und einen Spalt 62 entlang der gesamten Längsachse des Einfädeldüsenkörpers 51, wobei die Führungsbohrung 56 durch den Spalt 62 zweigeteilt ist, und wobei im Einfädeldüsenkörper 51 ein Festkörpergelenk 60 ausbildet ist (vgl. Figuren 3 und 4). Das Festkörpergelenk 60 verbindet den durch den Spalt 62 ansonsten zweigeteilten Einfädeldüsenkörper 51. Das Festkörpergelenk wird durch eine Materialdünnstelle im Einfädeldüsenkörper erzeugt, z.B. durch eine Einfädeldüsenkörperbohrung welche durch den Einfädeldüsenkörper entlang seiner Längsachse verläuft und nahe der zylindrischen Oberfläche des Einfädeldüsenkörpers angeordnet ist. Durch die - mittels Krafteinwirkung - erzeugte elastische Deformation des Festkörpergelenkes 60 können die beiden Hälften des quasi zweigeteilten Einfädeldüsenkörpers 51 von einer durch den Spalt 62 gebildeten offenen Position in eine geschlossene Position gebracht werden. Hebt man die Krafteinwirkung auf, gehen die beiden Hälften des zweigeteilten Einfädeldüsenkörpers 51 wieder in ihre offene Position, d.h. Ruhestellung zurück. Durch Schliessung der Einfädeldüse 50 kommen die beiden Hälften des Einfädeldüsenkörpers 51 eben aufeinander zu liegen, wodurch aus der in Ruhestellung zweigeteilten Führungsbohrung 56 eine geschlossene Führungsbohrung 56 gebildet wird. Die erfindungsgemässe Einfädeldüse ist sehr kompakt, vergleichsweise kostengünstig, und dennoch sehr genau.

Vorzugsweise besteht die Einfädeldüse 50 aus einem länglichen zylindrischen Einfädeldüsenkörper 51 und einer am Umfang des Einfädeldüsenkörpers 51 angebrachten Einfädeldüsenplatte 52. Die vorzugsweise monolithische Einfädeldüse 50 ist mittels der Einfädeldüsenplatte 52 an einem Einfädeldüsensupport 33 der Einfädelvorrichtung 30 montiert. Die Einfädeldüsenplatte 52 ist vorzugsweise scheibenförmig, kann aber auch anders gestaltet sein.

Die erfindungsgemässe Einfädeldüse 50 umfasst wie erwähnt: eine Führungsbohrung 56, einen Spalt 62 entlang der Führungsbohrung 56 und ein Festkörpergelenk 60, wobei sich diese drei Elemente über die gesamte Länge des Einfädeldüsenkörpers 51 erstrecken.
Vorzugsweise ist das Festkörpergelenk 60 wie folgt realisiert (siehe Figuren):
- nahe am Rand des Einfädeldüsenkörpers 51 ist parallel zur Längsachse des Einfädeldüsenkörpers 51 und verbunden mit dem Spalt 62 eine Einfädeldüsenkörperbohrung 59 eingebracht, sodass der Spalt 62 die Führungsbohrung 56 in Zwei geteilt wird und anschliessend in diese Einfädeldüsenkörperbohrung 59 fällt;
- zwischen der Einfädeldüsenplatte 52 und dem Einfädeldüsenkörper 51 ist ein Trennschnitt 55 eingebracht (siehe Figuren 4, 5 und 6), wobei dieser Trennschnitt 55 um eine Hälfte des Einfädeldüsenkörpers 51 führt, vom Spalt 62 bis mindestens zum Bereich der Einfädeldüsenkörperbohrung 59. Auf diese Weise sind die beiden Hälften des Einfädeldüsenkörper 51 lediglich durch das Festkörpergelenk 60 verbunden (siehe Figuren).

Das Festkörpergelenk 60 blockiert sämtliche Freiheitsgrade mit Ausnahme eines Rotations-Freiheitsgrades. Somit kann der Spalt 62 durch Zusammendrücken mindestens einer der beiden Hälften des Einfädeldüsenkörpers 51 zur anderen Hälfte geschlossen werden, wobei eine genaue geschlossene Führungsbohrung 56 entsteht. Die erfindungsgemässe Einfädelvorrichtung 30 benötigt keine weiteren geometrischen Merkmale zur genauen Paarung der beiden Hälften des Einfädeldüsenkörpers 51, da das Festkörpergelenk intrinsisch hochgenau ist.

Bei der erfindungsgemässen Einfädelvorrichtung 30 handelt es sich um eine vom oberen und unteren Drahtführungskopf separate Vorrichtung. Die erfindungsgemässe Einfädelvorrichtung 30 ist deshalb beweglich gestaltet, d.h. sie kann z.B. kontrolliert von einer Ruhelage in eine Arbeitsposition und zurück geschwenkt werden. Die Ruhelage ist eine Position, in welcher das Werkstück ohne Einschränkung bzw. Behinderung des oberen und unteren Drahtführungskopfes durch die erfindungsgemässe Einfädelvorrichtung bearbeitet werden kann.

Die erfindungsgemässe Einfädelvorrichtung ist beweglich gestaltet, d.h. sie kann z.B. kontrolliert von einer Ruhelage in eine Arbeitsposition und zurück geschwenkt werden. Die Ruhelage ist eine Position, in welcher das Werkstück ohne Einschränkung bzw. Behinderung durch die Einfädelvorrichtung bearbeitet werden kann. Die gesamte Einfädelvorrichtung befindet sich hierbei vorzugsweise oberhalb der Werkstückebene. Besonders bevorzugt ist die Einfädelvorrichtung 30 an der Pinole montiert. Die Arbeitsposition bzw. Einfädelbetriebsstellung ist eine eindeutige Position der Einfädelvorrichtung 30 gegenüber dem oberen Drahtführungskopf, die vorzugsweise durch einen mechanischen Anschlag definiert ist. Die Einfädeldüse 50 bzw. die Führungsbohrung 56 ist bevorzugt exakt senkrecht zur Werkstückebene angeordnet. Die Bewegung zwischen Ruhelage und Arbeitsposition erfolgt vorzugsweise durch eine einfache einachsige Bewegung, z.B. einer Schwenkbewegung, die beispielsweise mittels eines Zahnrades, eines Kniehebel oder anderer Übertragungsmitteln erzielt wird. Zur Betätigung der Einfädelvorrichtung genügt ein einfaches Antriebsorgan, z.B. ein pneumatischer Zylinder mit Federrückstellung.
Vorzugsweise ist eine Schwenkbewegung derart ausgelegt, dass die Einfädelvorrichtung 30 über den Wendepunkt der Schwenkbewegung hinaus geschwenkt wird, wobei die Einfädeldüse 50 zur Einfädelbetriebsstellung an den oberen Drahtführungskopf geführt wird. Durch das Schwenken über den Wendepunkt hinaus umfasst der letzte Teil der Schwenkbewegung der Einfädelvorrichtung 30 eine Bewegungskomponente nach oben. Hierbei wird die Einfädelvorrichtung 30 in unmittelbare Nähe oder an den oberen Drahtführungsköpf gebracht.
Die erfindungsgemässe Einfädelvorrichtung bietet eine universelle Lösung an, die für verschiedene Drahtführungsköpfe verwendet werden kann. Sie kann auch nachträglich auf bereits bestehenden Maschinen eingebaut werden. Bestehende Drahtführungsköpfe müssen hierzu nicht unbedingt neu gestaltet werden. Damit entfällt der Aufwand zur Integration einer erweiterten Einfädelfunktion.

Im Folgenden wird die erfindungsgemässe Einfädelvorrichtung anhand von schematischen Figuren dargestellt und erläutert. Es soll aber ausdrücklich darauf hingewiesen werden, dass sich die Erfindung bzw. der Erfindungsgedanke nicht auf die in diesen Beispielen gezeigten Ausführungsformen beschränkt. Die Figuren zeigen:
- Figur 1: eine erfindungsgemässe Einfädelvorrichtung während dem Einfädeln in eine Startbohrung;
- Figur 2: eine räumliche Darstellung der erfindungsgemässen Einfädelvorrichtung;
- Figur 3: eine räumliche Darstellung der Einfädeldüse, von oben;
- Figur 4: eine räumliche Darstellung der Einfädeldüse, von unten;
- Figur 5: eine Ansicht von unten auf die Einfädeldüse;
- Figur 6: eine Detailansicht der Einfädeldüse aus Figur 5;
- Figur 7: eine Seitenansicht der Einfädeldüse;
- Figur 8,9: Schnittansichten der Einfädeldüse;
- Figur 10: eine Ansicht von unten auf die Einfädeldüse;
- Figur 11: eine Ansicht von unten auf eine weitere Einfädeldüse.

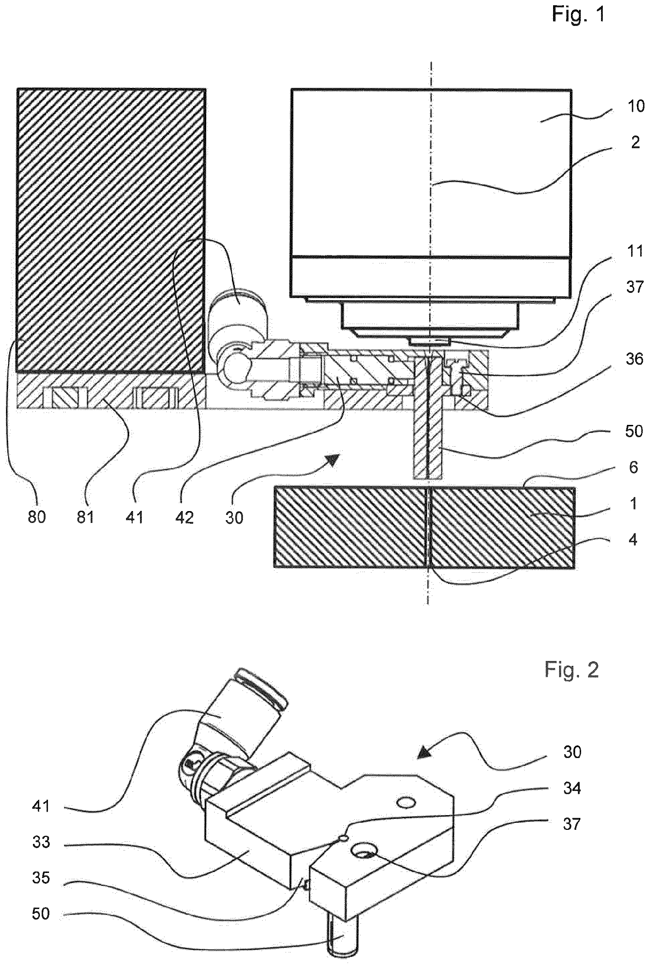

Figur 1 zeigt eine Variante der erfindungsgemässen Einfädelvorrichtung 30 in der Einfädelbetriebsstellung, während dem Einfädeln der Drahtelektrode in einer kleinen Startbohrung 4 im Werkstück 1. Die Einfädelvorrichtung 30 ist hier vor dem oberen Drahtführungskopf 10 positioniert, vorzugsweise liegt die Einfädelvorrichtung 30 direkt auf der Vorderseite desselben auf. Die Einfädelvorrichtung 30 ist mittels eines Anschlussstücks 81 an eine Schwenkeinrichtung 80 montiert.
Figur 2 zeigt die gesamte Einfädelvorrichtung 30 aus Figur 1 ohne Schwenkeinrichtung, losgelöst von der Drahterodiermaschine.

Die Figuren 3 bis 7 zeigen bevorzugte Ausführungsformen der Einfädeldüse 50. Die Einfädelvorrichtung 30 besteht unter anderem aus einem Einfädeldüsensupport 33, zur Aufnahme der Einfädeldüse 50. Der Einfädeldüsensupport 33 umfasst hierzu eine präzise Auflagefläche 36 (siehe Figur 1) auf der die Einfädeldüsenplatte 52 montiert ist. Die Position der Einfädeldüse 50 auf dem Einfädeldüsensupport 33 ist mittels eines Passstiftes (nicht abgebildet) und einer Schraube 37 gesichert. Der Passstift ist fest auf dem Einfädeldüsensupport 33 montiert; an der Einfädeldüsenplatte 52 ist die Positionierbohrung 53 vorgesehen, in welcher der vorgenannte Passstift eingesetzt wird. An der Einfädeldüsenplatte 52 ist weiterhin eine Gewindebohrung 61 zur Befestigung der Einfädeldüse 50 am Einfädeldüsensupport 33 vorgesehen, sodass die Einfädeldüse 50 bei Bedarf einfach ausgetauscht werden kann. Vorzugsweise ist die Position des Einfädeldüsensupports 33 justierbar, sodass die Einfädeldüse 50 präzise fluchtend gegenüber dem oberen Drahtführungskopf positioniert werden kann.

Die Einfädelvorrichtung 30 umfasst ferner einen Druckkolben 42 (siehe Figur 1) der Normal zur Drahtlaufrichtung im Einfädeldüsensupport 33 geführt ist und seitlich auf die Einfädeldüse 50 einwirkt. Über den Druckleitungsanschluss 41 wird Druckluft zur Betätigung des Druckkolbens 42 zugeführt. Bei Zuführung von Druckluft wird der Druckkolben 42 auf Einfädeldüse 50 gedrückt, wobei der Spalt 62 und die Führungsbohrung 56 geschlossen wird. Zum Öffnen des Spaltes 62 wird Druckluft abgelassen, so dass der Druckkolben 42 durch eine der Druckluft entgegenwirkende Druckfeder (nicht abgebildet) in die Ruhelage zurückgebracht wird. Die Rückführung des Druckkolbens 42 kann alternativ ebenfalls pneumatisch, durch eine zweite Druckleitung erfolgen.
Selbstverständlich sind auch andere Bewegungsmittel anstelle des Druckkolbens 42 denkbar.

Der Einfädeldüsensupport 33 weist auf der oberen Seite einen vorzugsweise trichterförmigen Support-Eingang 34 auf (siehe Figur 2), durch den die Drahtelektrode 2 in die darunterliegende Einfädeldüse 50 gelangen kann. An einer Seite des Einfädeldüsensupports 33 ist in Übereinstimmung zu Spalt 62 ein Support-Ausgang 35 vorgesehen, sodass die Einfädelvorrichtung 30 nach Abschluss des Einfädelvorgangs aus der eingespannten Drahtelektrode 2 herausgeschwenkt werden kann.
Die Einfädeldüse 50 (vgl. Figuren 3 und 4) ist das Kernstück der erfindungsgemässen Einfädelvorrichtung 30. Sie besteht aus einer Einfädeldüsenplatte 52 und einem länglichen Einfädeldüsenkörper 51. Die Einfädeldüsenplatte 52 dient im Wesentlichen zur genauen Positionierung und Fixierung des Einfädeldüsenkörpers 51 und zur genauen Montage der Einfädeldüse 50 am Einfädeldüsensupport 33 und natürlich dem Schliessen des Spaltes 62 bei entsprechender seitlicher Krafteinwirkung.

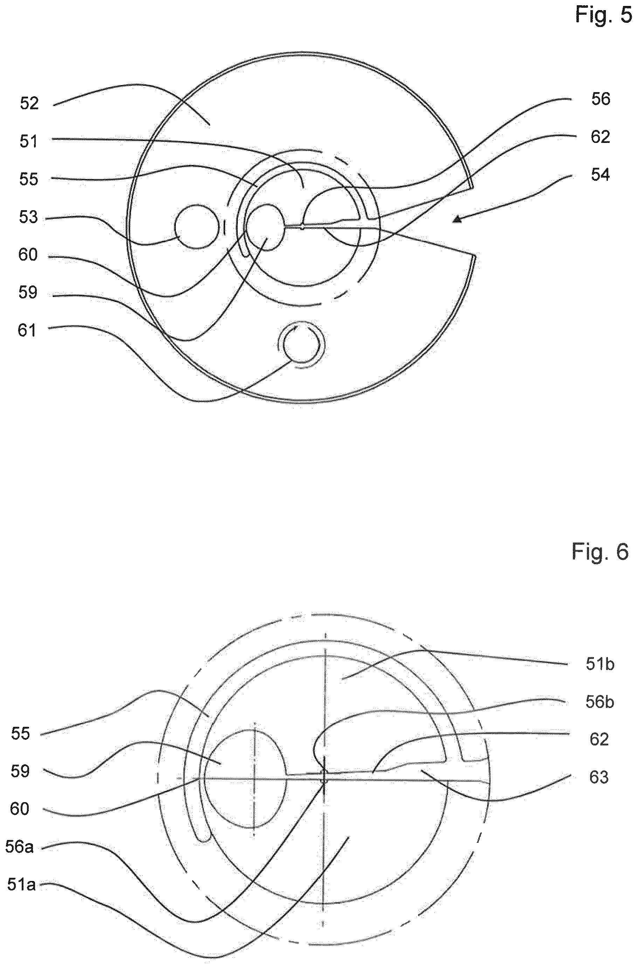

Die besonderen Merkmale des Einfädeldüsenkörpers 51 sind am besten aus Figuren 5 und 6 ersichtlich. In der Mitte des Einfädeldüsenkörpers 51 ist die Führungsbohrung 56 eingebracht, welche den gesamten Einfädeldüsenkörper 51 durchquert. Die Führungsbohrung 56 dient im Betrieb der Einfädelvorrichtung 30 zur präzisen Führung der Drahtelektrode 2 und zur Bildung des üblichen Einfädelstrahls. Der Einfädeldüsenkörper 51 ist durch einen über die gesamte Höhe eingebrachten Spalt 62 fast komplett in zwei Hälften geteilt. Die Führungsbohrung 56 ist durch den Spalt 62 zweigeteilt.

Im äusseren Bereich, nahe am Rand des Einfädeldüsenkörpers 51 ist eine Einfädeldüsenkörperbohrung 59 eingebracht parallel zum Spalt 62 bzw. zur Längsachse und ebenfalls über die gesamte Länge des Einfädeldüsenkörpers 51. Zwischen der Einfädeldüsenplatte 52 und dem Einfädeldüsenkörper 51 ist ein Trennschnitt 55 eingebracht, welcher um eine Hälfte des Einfädeldüsenkörpers 51 führt, vom Spalt 62 bis vorzugsweise über die Einfädeldüsenkörperbohrung 59 hinaus. Eine Hälfte des Einfädeldüsenkörpers 51 ist also bis auf eine verbleibende Materialdünnstelle 60 komplett von der anderen Hälfte und von der Einfädeldüsenplatte 52 getrennt. Dadurch entsteht am Einfädeldüsenkörper 51 im Bereich der Einfädeldüsenkörperbohrung 59 das Festkörpergelenk 60.

Festkörpergelenke haben bekanntlich einige sehr interessante Eigenschaften; insbesondere sind diese Spielfrei, nahezu Reibungs- und Verschleissfrei. Ausserdem können diese schadlos in feuchter und schmutziger Umgebung arbeiten. Nachteilig ist die begrenzte Verformung, also der zulässige Auslenkwinkel; dieser Nachteil ist hier jedoch unwesentlich, weil nur eine kleine Bewegung erforderlich ist, damit die Einfädeldüse 50 aus der eingefädelten Drahtelektrode fahren kann. Das Festkörpergelenk 60 erstreckt sich bevorzugt über die gesamte Länge des Einfädeldüsenkörpers 51, was sich positiv auf die Torsionssteifigkeit des Festkörpergelenks auswirkt. Die erfindungsgemässe Einfädeldüse kann von einer offenen Position in eine geschlossene Position gebracht werden, indem deren beiden Hälften 51a und 51b durch ein kleine Drehung um das Festköpergelenk 60 zueinander bewegt werden, wodurch der Spalt 62 geschlossen und damit die Führungsbohrung gebildet wird. In dieser geschlossenen Position kann die Drahtelektrode 2 genau eingefädelt werden.

Die Führungsbohrung 56 entsteht durch Zusammenfügen bzw. Schliessen der beiden Hälften 51a und 51b des Einfädeldüsenkörpers 51. Die Führungsbohrung 56 hat vorzugsweise einen kreisförmigen Querschnitt. Vorzugsweise ist die Führungsbohrung 56 über beiden Hälften 51a und 51b des Einfädeldüsenkörpers 51 geteilt, sodass beide Schnittflächen des Spaltes 62 die Führungsbohrung 56 in zwei halbkreisförmige Konturen 56a und 56b aufteilen (siehe Figuren 5 und 6). Eine Führungsbohrung 56 kann erfindungsgemäss aber auch anders gestaltet sein: zum Beispiel kann an einer Fläche des Spaltes 62 eine V-Förmige Öffnung eingebracht sein und an der gegenüberliegenden Fläche ist gar keine Bearbeitung eingebracht. Dadurch entsteht beim Schliessen der beiden Hälften eine im Querschnitt dreieckige Führungsbohrung.

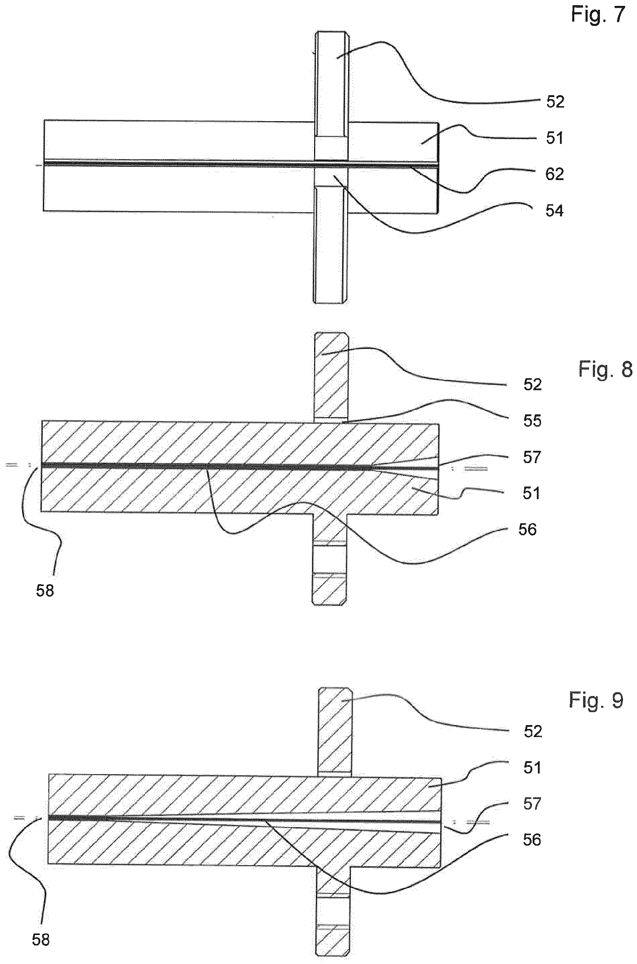

Vorzugsweise ist die erfindungsgemässe Einfädeldüse, bzw. die Führungsbohrung 56 auf einen bestimmten Drahtdurchmesser oder Drahtdurchmesserbereich abgestimmt. Der Durchmesser der Führungsbohrung 56 ist dabei vorzugsweise nicht viel grösser als der Durchmesser der Drahtelektrode 2 (vgl. Figur 7).

Der Eingang 57 der Führungsbohrung 56 ist vorzugsweise kegelförmig bzw. trichterförmig gestaltet um die Einführung des Drahtes 2 in den Einfädeldüsenkörper 51 zu begünstigen (siehe Figuren 8 und 9). Der Ausgang der Führungsbohrung ist dagegen vorzugsweise scharfkantig. Die untere Fläche des Einfädeldüsenkörpers 51 ist vorzugsweise eben, kann jedoch auch kegelförmig ausgebildet sein. Alternativ weist die untere Fläche des Einfädeldüsenkörpers 51 einen kleinen Zapfen auf (nicht dargestellt), dessen Durchmesser kleiner als die Startbohrung am Werkstück ist. Während dem Einfädelvorgang kann die Einfädeldüse 50 zum Werkstück hin bewegt werden, sodass der Zapfen des Einfädeldüsenkörpers 51 in die Startbohrung geführt werden kann.

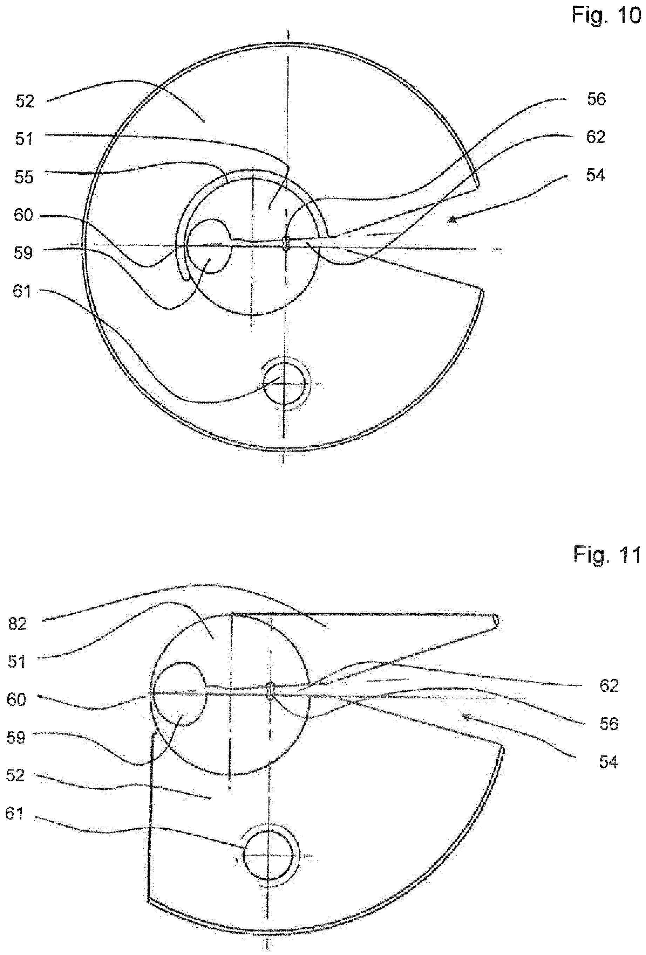

Die Führungsbohrung 56 kann allenfalls mehrere kegelförmige Abschnitte unterschiedlicher Steilheit umfassen. Der kegelförmige Abschnitt (Fig. 8) kann sich über einen Teil oder über die gesamte Länge (Fig. 9) der Führungsbohrung 56 erstrecken.
Die Führungsbohrung 56 kann gegenüber der Mitte des Einfädeldüsenkörpers 51 auch versetzt eingebracht sein, beispielsweise wie in Figur 10 zu sehen ist.

Figur 11 zeigt eine weitere Ausführungsform der Einfädeldüse 50, bei welcher der Trennschnitt modifiziert ist. Dabei wird wie bei den früheren Ausführungsformen ein Teil der Einfädeldüsenplatte 52 um den Einfädeldüsenkörper 51 im Bereich der Einfädeldüsenkörperbohrung 59 so geschnitten, dass ein Festkörpergelenk 60 entsteht. Unterhalb des so gebildeten Festkörpergelenks wird der Trennschnitt nun so verlängert, dass ein Teil Einfädeldüsenplatte 52 quasi abgetrennt wird. Der verbleibende Teil der Einfädeldüsenplatte 52 genügt für die platzsparende genaue Positionierung und Befestigung der Einfädeldüse 50 im Bereich der Einfädelvorrichtung 30.
Der Trennschnitt geht nicht mehr vom Spalt 62 aus, sondern führt tangential an den Einfädeldüsenkörper 51 heran. Auf diese Weise verbleibt ein auskragendes Hebelstück 82 der Einfädeldüsenplatte 52 am Einfädeldüsenkörper 51 befestigt. Dadurch bleibt der Plattenausgang 54 beidseitig bestehen. Hebelstück 82 bietet sich zur zentrischen oder exzentrischen Übertragung der Kraft vom Druckkolben 42; bei exzentrischer Übertragung wird die Schliesskraft im Bereich der Führungsbohrung 56 durch die Hebelwirkung verstärkt.

Bei speziellen Ausführungsformen können in einem Einfädeldüsenkörper auch zwei Führungsbohrungen unterschiedlichen Durchmessers vorliegen (ohne Abbildung). Beide Führungsbohrungen werden durch den Spalt 62 zweigeteilt. Die Einfädelvorrichtung 30 verfügt in diesem Spezialfall über einen zusätzlichen Translations-Freiheitsgrad, um die gewünschte Führungsbohrung gegenüber dem oberen Drahtführungskopf 10 zu positionieren.

Die Einfädeldüsenkörperbohrung 59 kann zylindrisch, oval oder anderer Form sein. Wesentlich ist, dass das Festkörpergelenk 60 eine optimale Geometrie aufweist, und dass einen ausreichenden Abstand zur Führungsbohrung 56 gehalten wird. Durch spezielle Ausbildung der Einfädeldüsenkörperbohrung 59 kann eine kontrollierte Nachgiebigkeit der Schnittflächen des Spaltes 62 im Bereich um die Führungsbohrung 56 erzielt werden und damit ein optimiertes Schliessverhalten erreicht werden.

Wie erwähnt, teilt der Spalt 62 den Einfädeldüsenkörper 51 und die Führungsbohrung 56 entzwei. Der Spalt beginnt an der Peripherie des Einfädeldüsenkörpers 51 und fällt in die Einfädeldüsenkörperbohrung 59. Der Spalt 62 ist im Bereich um die Führungsbohrung 56 nur gerade so breit, dass die Drahtelektrode 2 bei offener Einfädeldüse unbehindert aus dem Spalt 62 gelangt. Wichtig für die Präzision ist, dass die Schnittflächen des Spaltes 62 bei geschlossener Einfädeldüse genau parallel sind und sauber aufeinander liegen, damit eine vollständig geschlossene Führungsbohrung 56 gebildet wird. Die Schnittflächen von Spalt 62 verlaufen deshalb bei offener Einfädeldüse leicht keilförmig zueinander. Im äusseren Bereich des Einfädeldüsenkörpers 51 kann der Spalt 62 zusätzlich mit einer Spaltaufweitung 63 vorgesehen sein (siehe Figuren 5 und 6). Dadurch liegen die Schnittflächen des Spaltes 62 besser aufeinander und die eingefädelte Drahtelektrode 2 kann besser aus dem Spalt 62 geführt werden.

Die gesamte Einfädeldüse 50 oder zumindest der Einfädeldüsenkörper 51 ist vorzugsweise monolithisch, d.h. aus einem einzigen Teil gefertigt. Die zylindrischen Aussenflächen des Einfädeldüsenkörpers 51 und der Einfädeldüsenplatte 52 sind vorzugsweise geschliffen oder gedreht.
Die für die Funktion wesentlichen Bearbeitungen, insbesondere Spalt 62, Führungsbohrung 56, Einfädeldüsenkörperbohrung 59, Trennschnitt 55 sowie Plattenausgang 54 werden vorteilhaft mittels Drahterosion gefertigt. Die Merkmale des Einfädeldüsenkörpers werden dabei bevorzugt "im offenen Zustand" hergestellt. Spalt 62 ist also im Ruhezustand offen. Die Führungsbohrung 56 ist in zwei Hälften geteilt; vorzugsweise ist an beiden Schnittflächen des Spaltes 62 eine Hälfte der Führungsbohrung 56 eingebracht. Dadurch können die massgeblichen Bearbeitungen in einer Aufspannung und mit höchster Präzision gefertigt werden. Ausgehend von dem vorbearbeiteten zylindrischen Düsenkörper wird in einem einzigen Schnitt die gesamte Düsengeometrie erzeugt. Damit die höchste Fertigungsgenauigkeit erreicht wird, ist die Reihenfolge der Bearbeitungen zu beachten.

Wie im vorangehenden Absatz beschrieben ist die Drahterosion das bevorzugte Verfahren um auf einfache Weise die wesentlichen Merkmale des Einfädeldüsenkörpers einzubringen. Die Drahterosion zeichnet sich unter anderem dadurch aus, dass Bearbeitungen mit extrem hohem Aspektverhältnis und hochgenau erzeugt werden können.
Alternativ ist die Einfädeldüse 50 zumindest teilweise mittels Senkerosion bearbeitet, oder mittels eines additiven Herstellverfahrens generiert.
Die erfindungsgemässe Einfädelvorrichtung 30 ist ausserhalb des eigentlichen Drahtführungskopfes angeordnet und beweglich, vorzugsweise schwenkbar, ausgeführt. Sie findet ihren Einsatz bei Bedarf, regelmässig oder auch nur selektiv beispielsweise bei schwierigen Einfädelbedingungen. Sie wird ausschliesslich während des Einfädelvorganges in die Arbeitsposition bewegt, ist also ansonsten in einer Ruhestellung ausserhalb des Arbeitsbereiches der Drahterodiermaschine positioniert. Die Einfädelvorrichtung 30 wird für den Einfädelvorgang vorzugsweise mittels einer Schwenkeinrichtung 80 unmittelbar vor dem oberen Drahtführungskopf 10 gebracht, so dass die Führungsbohrung der Einfädeldüse koaxial zur Drahtlaufrichtung der Drahtelektrode im oberen Drahtführungskopf liegt. Die Einfädelvorrichtung 30 übt dabei keine Kraft auf den oberen Drahtführungskopf aus. Damit bildet die erfindungsgemässe Einfädelvorrichtung 30 praktisch eine vorübergehende Verlängerung des Drahtlaufsystems im Zufuhrbereich, sodass die Spitze der Drahtelektrode 2 vom oberen Drahtführungskopf unmittelbar in die erfindungsgemässe Führungsbohrung 56 hineinfährt. Die Drahtelektrode wird vorzugsweise ohne Zuführung von dielektrischer Flüssigkeit durch die Führungsbohrung 56 geführt und in das Werkstück 1 eingefädelt.

Alternativ zur obiger Ausführungsform, bei der die Einfädelvorrichtung 30 für den Einfädelvorgang kraftfrei vor dem oberen Drahtführungskopf 10 geführt wird, kann die Einfädelvorrichtung für den Einfädelvorgang fest und spaltfrei mit dem Drahtführungskopf 10 verbunden sein, z.B. Kraftschlüssig, Formschlüssig oder kombiniert. Hier wird die Drahtelektrode vorzugsweise unter Zuführung von dielektrischer Flüssigkeit durch die Führungsbohrung 56 geführt und in das Werkstück 1 eingefädelt. Die dielektrische Flüssigkeit unter Druck wird vorzugsweise im oberen Drahtführungskopf bereitgestellt, besonders bevorzugt an der integrierten Einfädeldüse.

Nach dem Einfädeln der Drahtelektrode 2 durch das Werkstück und durch den unteren Drahtführungskopf wird die Einfädeldüse 50 wieder geöffnet, so dass die Einfädelvorrichtung 30 unbehindert aus der nunmehr gespannten Drahtelektrode 2 herausgeschwenkt und wieder in ihre Ruhelage gebracht werden kann. Einfädeldüse 50 und Einfädeldüsensupport 33 sind hierzu entsprechend gestaltet; der Einfädeldüsenkörper 51 umfasst Spalt 62 und bevorzugt eine Spaltaufweitung 63 auf. Die Einfädeldüsenplatte 52 umfasst in Übereinstimmung zum Spalt 62 des Einfädeldüsenkörpers 51 einen Plattenausgang 54, und der Einfädeldüsensupport 33 umfasst in Übereinstimmung zum Spalt 62 einen Support-Ausgang 35.

Nachfolgend sind einige Hinweise bezüglich den bevorzugten Dimensionen und zum bevorzugten Anwendungsbereich der erfindungsgemässen Einfädelvorrichtung angegeben. Selbstverständlich ist die Erfindung nicht auf eine Anwendung mit diesen Dimensionen eingeschränkt. Der Einfädeldüsenkörper 51 ist vorzugsweise etwa 10 bis 25 mm, bevorzugt etwa 18 mm lang, mit einem Durchmesser von etwa 4 mm. Die Einfädeldüsenplatte 52 hat einen Durchmesser von etwa 10 bis 15mm, vorzugsweise etwa 12 mm. Die Einfädeldüsenplatte 52 ist im oberen Bereich der Einfädeldüse angeordnet, bevorzugt im ersten Drittel des Einfädeldüsenkörpers 51. Die Führungsbohrung 56 liegt vorzugsweise in der Mitte des Einfädeldüsenkörpers 51, kann aber auch gegenüber der Mitte in Richtung des Spaltes 62 versetzt sein. Insbesondere kann die Führungsbohrung 56 bei Einfädeldüsen für dickere Drähte dem Spalt 62 entlang nach aussen versetzt sein, damit diese unbehindert aus dem Spalt geführt werden können. Sie kann auch seitlich zu Spaltes 62 leicht versetzt sein, wird jedoch stets durch den Spalt 62 geteilt. Der Durchmesser der Führungsbohrung 56 ist im geschlossenen Zustand nur leicht grösser als die einzufädelnde Drahtelektrode 2. Die Durchmesserdifferenz beträgt weniger als 100µm, vorzugsweise etwa 20µm. Die Führungsbohrung 56 und oder der Eingang 57 der Führungsbohrung is bevorzugt kegelförmig, mit einem Öffnungswinkel von etwa 1° bis 15°.
Die beiden Schnittflächen des Spaltes 62 sind derart hergestellt, dass sie bei geschlossener Einfädeldüse parallel zueinander sind. Im offenen Zustand der Einfädeldüse stehen die beiden Schnittflächen des Spaltes 62 in einem Winkel von etwa 3° zueinander, mit einem Schnittpunkt in Festkörpergelenk 60. Im Bereich der Führungsbohrung 56 ist der Spalt nur leicht grösser als die einzufädelnde Drahtelektrode 2. Das Festkörpergelenk 60 ist an der dünnsten Stelle vorzugsweise 100µm dick oder dünner.
Während des Einfädelvorganges wird die Führungsbohrung 56 mit unter Druck stehender dielektrische Flüssigkeit beaufschlagt; der Flüssigkeitsdruck beträgt etwa 3 bar.
Die erfindungsgemässe Einfädelvorrichtung 30 kann mit allen Drahtelektroden eingesetzt werden, bevorzugt beträgt der Drahtelektrodendurchmesser 200µm oder weniger. Die Einfädeldüse ist speziell für feinste Drähte geeignet, z.B.Drahtelektroden mit einem Durchmesser von 70 µm und kleiner. Vorzugsweise wird für einen bestimmten Drahtelektrodendurchmesser oder einen bestimmten Durchmesserbereich eine spezielle Einfädeldüse 50 bereitgestellt, mit entsprechend geeignetem Durchmesser der Führungsbohrung 56.
Dank der speziellen Ausbildung der Einfädeldüse 50, kann die erfindungsgemässe Einfädelvorrichtung 30 auch dann eine Startbohrung sicher treffen
Der allgemeine Aufbau der Drahtführungsköpfe wird nun anhand der Figur 1 kurz erläutert. Die Drahterodiermaschine umfasst einen oberen Drahtführungskopf 10 und einen unteren Drahtführungskopf (nicht dargestellt). Die Drahtelektrode 2 läuft über eine nicht dargestellte Zuführungsstrecke des Drahtantriebs von oben her zum oberen Drahtführungskopf 10, führt über einen Arbeitsraum, wobei der Arbeitsraum durch den oberen und den unteren Drahtführungskopf begrenzt ist, erreicht den unteren Drahtführungskopf und wird von dort zur Drahtentsorgung abgezogen . Während der drahterosiven Bearbeitung des Werkstücks 1 läuft der Draht zwischen einer oberen Drahtführung und einer unteren Drahtführung frei gespannt, mit einer bestimmten Drahtspannung und Drahtlaufgeschwindigkeit ab. Vor der Aufnahme bzw. Wiederaufnahme der drahterosiven Bearbeitung wird die Drahtelektrode 2 im Arbeitsraum durch das Werkstück oder auch neben dem Werkstück eingefädelt. Die Spitze der Drahtelektrode 2 liegt z.B. im Bereich des oberen Drahtführungskopfes 10 bereit. Hier sind nämlich in der Regel Mittel zum automatischen Schneiden der Drahtelektrode untergebracht (nicht dargestellt). Nachfolgend werden beispielhaft die einzelnen Schritte des Einfädelvorgangs bei Verwendung der erfindungsgemässen Einfädelvorrichtung 30 erläutert:
Die Maschinenachsen werden auf die gewünschte X- und Y-Position gebracht, wo die Drahtelektrode eingefädelt werden soll; der obere Drahtführungskopf 10 wird durch Bewegung der Z-Achse angehoben, derart dass die Einfädeldüse 50 ohne Berührung mit dem Werkstück 1 vor den oberen Drahtführungskopf 10 positioniert bzw. eingeschwenkt werden kann; Die Schwenkeinrichtung 80 wird betätigt,
wodurch die Einfädelvorrichtung 30 in die Arbeitsposition, unmittelbar vor dem oberen Drahtführungskopf 10 bewegt wird; die Führungsbohrung 56 der Einfädeldüse 50 wird durch Betätigung eines Druckkolbens 42 auf die Einfädeldüsenplatte 52 geschlossen; Arbeitsflüssigkeit (Dielektrikum) wird unter Druck an den oberen Drahtführungskopf 10 geführt; die Drahtelektrode 2 wird durch Aktivierung des Drahtantriebes vom oberen Drahtführungskopf 10 vorgeschoben und in die Einfädeldüse 50 geführt; die Drahtelektrode 2 wird durch die Einfädeldüse 50 und durch das Werkstück 1 geführt und anschliessend von dem unteren Drahtführungskopf aufgenommen und zum Drahtabzugsbereich geführt; die Drahtelektrode 2 ist damit eingefädelt. Die Zuführung von Druckmedium zum Druckkolben 42 (z.B. Luft) wird abgestellt, wodurch sich die Einfädeldüsenplatte 52 und die Einfädeldüse 50 wieder in ihre Ruhelage bewegen und sich der Spalt 62 am Einfädeldüsenkörper 51 damit wieder öffnet; die Schwenkeinrichtung 80 wird wieder betätigt um die Einfädelvorrichtung 30 in eine Ruhelage zu bringen; die offene Einfädeldüse 50 wird dadurch aus der eingespannten Drahtelektrode 2 geschwenkt; der obere Drahtführungskopf 10 wird durch Bewegung der Z-Achse nach unten verstellt, derart dass die obere Spüldüse 11 auf der Höhe der Werkstückebene 6 zu liegen kommt; der Erosionsbetrieb kann nun anfangen.

Selbstverständlich kann zusätzlich zur erfindungsgemässen externen Einfädelvorrichtung eine weitere konventionelle Einfädelvorrichtung zum Einsatz kommen. Z.B. eine Einfädelvorrichtung, welche mittels einer im oberen Drahtführungskopf integrierten Düse einen Einfädelstrahl erzeugt. Die externe Einfädeldüse ist in bestimmten Ausführungsformen eine Anbau bzw. eine Option. In einer besonderen Ausführungsform weist die Einfädelvorrichtung 30 ein oder zwei Rotationsfreiheitsgrade; die Einfädeldüse 50 kann dadurch geneigt werden, wodurch die Drahtelektrode auch in schiefe Bohrungen eingefädelt werden kann.

In vorliegender Beschreibung der Erfindung wurde beispielhaft eine Einfädeldüse 50 dargestellt, mit einem Einfädeldüsenkörper 51 der eine Führungsbohrung 56 aufweist, wobei die Führungsbohrung 56 durch einen Spalt 62 geteilt ist und ein Festkörpergelenk 60 aufweist.
In einer alternativen Ausführungsform, umfasst die erfindungsgemässe Einfädelvorrichtung einen ruhenden Teil und einen beweglichen Finger, der an einen Ende über ein Festkörpergelenk an den ruhenden Teil angebunden ist, und dessen anderes Ende zum ruhenden Teil hin- und wegbewegbar ist. An diesem zweiten Ende ist eine Führungsbohrung so eingebracht, dass bei Anschlag des beweglichen Fingers auf den ruhenden Teil die Führungsbohrung geschlossen wird.
Selbstverständlich sind weitere alternative Ausführungsformen möglich, beispielsweise Ausführungsformen mit zwei beweglichen Fingern die jeweils ein Festkörpergelenk aufweisen. Die in der Beschreibung im Detail dargestellte Ausführungsform zeichnet sich jedenfalls durch besonders kompakte und einfache Form aus.

Weitere Massnahmen und Ergänzungen die in Kombination mit der erfindungsgemässen Einfädelvorrichtung 30 angewendet werden können sind unter anderem dem eingangs erwähnten Stand der Technik zu entnehmen.

Die vorliegende Erfindung ist nicht auf die explizit genannten Möglichkeiten und Ausführungsformen beschränkt. Diese Varianten sind vielmehr als Anregung für den Fachmann gedacht, um die Erfindungsidee möglichst günstig umzusetzen.

### Bezugszeichenliste

- 1: Werkstück
- 2: Drahtelektrode, bzw. Draht
- 3: Drahtelektrodenspitze
- 4: Startbohrung
- 5: Schnittspalt
- 6: Werkstückebene
- 10: Oberer Drahtführungskopf
- 11: Spüldüse
- 30: Einfädelvorrichtung
- 33: Einfädeldüsensupport
- 34: Support-Eingang
- 35: Support-Ausgang
- 36: Auflagefläche zu Einfädeldüse
- 37: Schraube
- 41: Druckleitungsanschluss
- 42: Druckkolben
- 50: Einfädeldüse
- 51: Einfädeldüsenkörper
- 52: Einfädeldüsenplatte
- 53: Positionierbohrung
- 54: Plattenausgang
- 55: Trennschnitt
- 56: Führungsbohrung
- 57: Eingang der Führungsbohrung
- 58: Ausgang der Führungsbohrung
- 59: Einfädeldüsenkörperbohrung
- 60: Festkörpergelenk
- 61: Gewinde
- 62: Spalt
- 63: Spaltaufweitung
- 80: Schwenkeinrichtung
- 81: Anschlussstück zu Einfädeldüsensupport
- 82: Hebelstück

## Patentansprüche

1. Einfädeldüse (50) zum Einfädeln von Drahtelektroden (2) für Einfädelvorrichtungen (30) in Drahterodiermaschinen, wobei die Einfädeldüse (50) einen Einfädeldüsenkörper (51) aufweist, wobei der Einfädeldüsenkörper (51) eine Führungsbohrung (56) zur Führung der einzufädelnden Drahtelektrode (2) entlang seiner Längsachse besitzt, der Einfädeldüsenkörper (51) im Weiteren einen Spalt (62) entlang seiner Längsachse aufweist, welcher den Einfädeldüsenkörper (51) in zwei Teile aufteilt , **dadurch gekennzeichnet, dass** die zwei Teile an einem im Einfädeldüsenkörper (51) ausgebildeten Festkörpergelenk (60) verbunden sind, und wobei der Spalt die Führungsbohrung (56) in zwei Teile aufteilt.

2. Einfädeldüse (50) zum Einfädeln von Drahtelektroden (2) gemäss Anspruch 1, **dadurch gekennzeichnet, dass** die Einfädeldüse (50) eine Einfädeldüsenplatte (52) aufweist.

3. Einfädeldüse (50) zum Einfädeln von Drahtelektroden (2) gemäss Anspruch 2, **dadurch gekennzeichnet, dass** die Einfädeldüsenplatte (52) um den Umfang des Einfädeldüsenkörpers (51) angeordnet ist und einen Plattenausgang (54) besitzt, welcher den Spalt (62) freigibt.

4. Einfädeldüse (50) zum Einfädeln von Drahtelektroden (2) gemäss Anspruch 2, **dadurch gekennzeichnet, dass** die Einfädeldüsenplatte (52) mit dem Einfädeldüsenkörper (51) verbunden ist und dass im Verbindungsbereich zwischen Einfädeldüsenkörper (51) und Einfädeldüsenplatte (52) ein Trennschnitt (55) eingebracht ist, welcher zumindest im Bereich des Festkörpergelenkes (60) den Einfädeldüsenkörper (51) und die Einfädeldüsenplatte (52) voneinander trennt.

5. Einfädeldüse (50) zum Einfädeln von Drahtelektroden (2) gemäss einem der vorangehenden Anspruche, **dadurch gekennzeichnet, dass** der Einfädeldüsenkörper (51) entlang seiner Längsachse eine Einfädeldüsenkörperbohrung (59) aufweist, welche im Einfädeldüsenkörper (51) eine Materialdünnstelle formt, die das Festkörpergelenk (60) ausbildet.

6. Einfädeldüse (50) zum Einfädeln von Drahtelektroden (2) gemäss einem der vorangehenden Anspruche, **dadurch gekennzeichnet, dass** die Einfädeldüse (50) monolithisch ist.

7. Einfädeldüse (50) zum Einfädeln von Drahtelektroden (2) gemäss einem der vorangehenden Anspruche, **dadurch gekennzeichnet, dass** die Einfädeldüse (50) mittels Drahterosion hergestellt ist.

8. Einfädeldüse (50) zum Einfädeln von Drahtelektroden (2) gemäss einem der vorangehenden Anspruche, **dadurch gekennzeichnet, dass** die Führungsbohrung (56) der Einfädeldüse (50) im Wesentlichen zylindrisch ist und einen kegeligen Eingang (57) aufweist.

9. Einfädeldüse (50) zum Einfädeln von Drahtelektroden (2) gemäss einem der vorangehenden Anspruche, **dadurch gekennzeichnet, dass** der Spalt (62) keilförmig ausgeführt ist, vorzugsweise besitzt der Spalt (62) eine Spaltaufweitung (63).

10. Einfädelvorrichtung (30) für Drahterodiermaschinen zum Einfädeln von Drahtelektroden (2) vom oberen Drahtführungskopf (10) einer Drahterodiermaschine durch den Arbeitsraum der Drahterodiermaschine in den unteren Drahtführungskopf der Drahterodiermaschine,
**dadurch gekennzeichnet, dass**
die Einfädelvorrichtung (30) eine Einfädeldüse (50) zum Einfädeln von Drahtelektroden (2) gemäss einem der vorangehenden Anspruche besitzt.

11. Einfädelvorrichtung (30) für Drahterodiermaschinen nach Anspruch 10, **dadurch gekennzeichnet, dass** die Einfädelvorrichtung einen Einfädelsupport (33) besitzt an welchem die Einfädeldüse (50), vorzugsweise über die Einfädeldüsenplatte (52), montiert ist,
wobei der Einfädelsupport (33) im weiteren einen Druckkolben (42) aufweist, welcher eine Druckkraft auf die Einfädeldüse (50), vorzugsweise die Einfädeldüsenplatte (52), ausüben kann, so dass die zwei über den Spalt (62) getrennte Teile des Einfädeldüsenkörpers (51) zusammengedrückt werden und die zweigeteilte Führungsbohrung (56) geschlossen wird.

## Claims

1. Threading nozzle (50) for threading wire electrodes (2) for threading devices (30) in wire electrical discharge erosion machines, wherein the threading nozzle (50) has a threading-nozzle body (51), wherein the threading-nozzle body (51) has a guide bore (56) for guiding the wire electrode (2) to be threaded along the longitudinal axis of the former, the threading-nozzle body (51) along the longitudinal axis thereof further has a gap (62) which splits the threading-nozzle body (51) in two parts, **characterized in that** the two parts are connected at a solid-body articulation (60) which is configured in the threading-nozzle body (51), and wherein the gap splits the guide bore (56) in two parts.

2. Threading nozzle (50) for threading wire electrodes (2), according to Claim 1, **characterized in that** the threading nozzle (50) has a threading-nozzle plate (52) .

3. Threading nozzle (50) for threading wire electrodes (2), according to Claim 2, **characterized in that** the threading-nozzle plate (52) is disposed about the circumference of the threading-nozzle body (51), having a plate exit (54) which exposes the gap (62).

4. Threading nozzle (50) for threading wire electrodes (2), according to Claim 2, **characterized in that** the threading-nozzle plate (52) is connected to the threading-nozzle body (51), and **in that** a separation cut (55) which at least in the region of the solid-body articulation (60) mutually separates the threading-nozzle body (51) and the threading-nozzle plate (52) is incorporated in the connection region between the threading-nozzle body (51) and the threading-nozzle plate (52).

5. Threading nozzle (50) for threading wire electrodes (2), according to one of the preceding claims, **characterized in that** the threading-nozzle body (51) along the longitudinal axis thereof has a threading-nozzle body bore (59) which in the threading-nozzle body (51) forms a material thin place that configures the solid-body articulation (60).

6. Threading nozzle (50) for threading wire electrodes (2), according to one of the preceding claims, **characterized in that** the threading nozzle (50) is monolithic.

7. Threading nozzle (50) for threading wire electrodes (2), according to one of the preceding claims, **characterized in that** the threading nozzle (50) is produced by means of wire electrical discharge erosion.

8. Threading nozzle (50) for threading wire electrodes (2), according to one of the preceding claims, **characterized in that** the guide bore (56) of the threading nozzle (50) is substantially cylindrical, having a conical entry (57).

9. Threading nozzle (50) for threading wire electrodes (2), according to one of the preceding claims, **characterized in that** the gap (62) is embodied so as to be wedge-shaped, the gap (62) preferably having a gap widening (63).

10. Threading device (30) for wire electrical discharge erosion machines, for threading wire electrodes (2) from the upper wire-guiding head (10) of a wire electrical discharge erosion machine through the operating space of the wire electrical discharge erosion machine into the lower wire-guiding head of the wire electrical discharge erosion machine, **characterized in that**
the threading device (30) has a threading nozzle (50) for threading wire electrodes (2), according to one of the preceding claims.

11. Threading device (30) for wire electrical discharge erosion machines, according to Claim 10, **characterized in that** the threading device has a threading support (33) to which the threading nozzle (50) is fitted preferably by way of the threading-nozzle plate (52),
wherein the threading support (33) furthermore has a pressure piston (42) which may exert a compression force on the threading nozzle (50), preferably the threading-nozzle plate (52), such that those parts of the threading-nozzle body (51) that are separated by the gap (62) are compressed, closing the guide bore (56) that is split in two.

## Revendications

1. Buse d'enfilage (50) destinée à enfiler des fils-électrodes (2) pour des dispositifs d'enfilage (30) dans des machines d'électroérosion à fil, la buse d'enfilage (50) possédant un corps de buse d'enfilage (51), le corps de buse d'enfilage (51) possédant un orifice de guidage (56) destiné à guider le fil-électrode (2) à enfiler le long de son axe longitudinal, le corps de buse d'enfilage (51) possédant en outre une fente (62) le long de son axe longitudinal, laquelle divise le corps de buse d'enfilage (51) en deux parties, **caractérisée en ce que** les deux parties sont reliées au niveau d'une articulation en corps solide (60) configurée dans le corps de buse d'enfilage (51) et la fente divisant l'orifice de guidage (56) en deux parties.

2. Buse d'enfilage (50) destinée à enfiler des fils-électrodes (2) selon la revendication 1, **caractérisée en ce que** la buse d'enfilage (50) possède une plaque de buse d'enfilage (52) .

3. Buse d'enfilage (50) destinée à enfiler des fils-électrodes (2) selon la revendication 2, **caractérisée en ce que** la plaque de buse d'enfilage (52) est disposée autour du pourtour du corps de buse d'enfilage (51) et possède une sortie de plaque (54) qui libère la fente (62) .

4. Buse d'enfilage (50) destinée à enfiler des fils-électrodes (2) selon la revendication 2, **caractérisée en ce que** la plaque de buse d'enfilage (52) est reliée au corps de buse d'enfilage (51) et **en ce que** dans la zone de liaison entre le corps de buse d'enfilage (51) et la plaque de buse d'enfilage (52) est incorporée une couche de séparation (55) qui sépare le corps de buse d'enfilage (51) et la plaque de buse d'enfilage (52) l'un de l'autre au moins dans la zone de l'articulation en corps solide (60) .

5. Buse d'enfilage (50) destinée à enfiler des fils-électrodes (2) selon l'une des revendications précédentes, **caractérisée en ce que** le corps de buse d'enfilage (51) possède le long de son axe longitudinal un orifice de corps de buse d'enfilage (59) qui forme dans le corps de buse d'enfilage (51) un point mince de matière qui forme l'articulation en corps solide (60).

6. Buse d'enfilage (50) destinée à enfiler des fils-électrodes (2) selon l'une des revendications précédentes, **caractérisée en ce que** la buse d'enfilage (50) est monolithique.

7. Buse d'enfilage (50) destinée à enfiler des fils-électrodes (2) selon l'une des revendications précédentes, **caractérisée en ce que** la buse d'enfilage (50) est fabriquée par érosion à fil.

8. Buse d'enfilage (50) destinée à enfiler des fils-électrodes (2) selon l'une des revendications précédentes, **caractérisée en ce que** l'orifice de guidage (56) de la buse d'enfilage (50) est sensiblement cylindrique et possède une entrée conique (57).

9. Buse d'enfilage (50) destinée à enfiler des fils-électrodes (2) selon l'une des revendications précédentes, **caractérisée en ce que** la fente (62) est réalisée de manière cunéiforme, la fente (62) possédant de préférence un élargissement de fente (63).

10. Dispositif d'enfilage (30) pour machines d'électroérosion à fil destiné à enfiler des fils-électrodes (2) depuis la tête de guidage de fil (10) supérieure d'une machine d'électroérosion à fil à travers l'espace de travail de la machine d'électroérosion à fil dans la tête de guidage de fil inférieure de la machine d'électroérosion à fil,
**caractérisé en ce que**
le dispositif d'enfilage (30) possède une buse d'enfilage (50) destinée à enfiler des fils-électrodes (2) selon l'une des revendications précédentes.

11. Dispositif d'enfilage (30) pour machines d'électroérosion à fil selon la revendication 10, **caractérisé en ce que** le dispositif d'enfilage possède un support d'enfilage (33) sur lequel est montée la buse d'enfilage (50), de préférence par le biais de la plaque de buse d'enfilage (52),
le support d'enfilage (33) possédant en outre un piston presseur (42) qui peut exercer une force de pressage sur la buse d'enfilage (50), de préférence la plaque de buse d'enfilage (52), de sorte que les deux parties du corps de buse d'enfilage (51) séparées par la fente (62) puissent être pressées l'une contre l'autre et l'orifice de guidage (56) divisé en deux soit fermé.
